# EUROPEAN PATENT APPLICATION

(11) **EP 3 661 216 A1**
(43) Date of publication of application: **03.06.2020**
(21) Application number: 18306587.9
(22) Date of filing: 30.11.2018
(51) Int. Cl.: H04N 21/231, H04N 21/234

(54) **A METHOD AND APPARATUS FOR LOOP-PLAYING VIDEO CONTENT**

(71) Applicant: InterDigital CE Patent Holdings, 75017 Paris (FR)
(72) Inventor: CHUPEAU, Bertrand, 35576 Cesson-Sévigné Cedex (FR); DORE, Renaud, 35576 Cesson-Sévigné Cedex (FR); THUDOR, Franck, 35576 Cesson-Sévigné Cedex (FR)
(74) Representative: Huchet, Anne

(57) **Abstract**

Methods and devices are provided to play back a video content item comprising loop sequences. The player manages two or three playing modes and switch between first-in first-out video buffer and cycling video buffer with a size adapted to the loop sequences for which the player is in loop mode. A start point and an end point are obtained for each loop sequence of the video. In an embodiment, a code is associated with frames of the video to indicate to which loop(s) a frame belongs to.

## Description

### 1. Technical Field

The present principles generally relate to playing videos comprising loop sequences, that is sections of the video content which can be loop played, for example seamlessly. Particularly, but not exclusively, the technical field of the present principles is related to loop playing videos streamed from a server, for instance, in a tiled manner, to be displayed around the user, for example by a Head-Mounted Display (HMD) device.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A video content item may comprise loop sequences. A loop sequence is a time section of the video content item which may be loop played. A loop sequence has a start point (a frame index or a time stamp) and an end point (idem). When the video content item is played, the loop sequence will be loop played only under predetermined conditions, for instance if the user decides to loop play this sequence. Of course, the decision to loop play a loop-playable sequence has to be made before the playing of the end point of the loop sequence. In an advantageous embodiment, a loop playing is seamless, that is, the user does not see the transition (also called 'stitch') from the end point to the start point of the loop sequence.

In a client-server mode, when playing a streamed video content item, a player requests packets from the server. The player manages a buffer memory, storing frames to render and display, a little in advance and, in some implementations, a little after having rendered and displayed frames. Typically, the memory space reserved for the playing buffer corresponds more or less to two seconds of video, according to the compression level and/or whether the buffer stores compressed or decompressed frames.

When loop playing a section of a video content item in a client-server mode, the player requests the same frames at every loop because, in a loop sequence, the next frame is a frame that already have been rendered and displayed. A consequence of this mode is an overload of the network with requests for frames already transmitted, leading to a possible congestion of the network. Efficiently managing the streaming of video content comprising loop sequences in a client-server mode is already a challenge. When the frames are requested and transmitted by tiles, for example for an immersive rendering (for instance in a HMD), managing requests and buffer lacks an efficient solution as the next tile to request may or may not have been requested yet.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate a method of playing a video content item comprising at least a loop sequence. The method comprises obtaining data representative of a start point and an end point of a loop sequence and playing the video content item in a mode, called normal mode, for this loop sequence, using a first-in-first-out video buffer. When receiving a first command for the loop sequence, playing the video content item in a mode, called loop mode for this loop sequence, using a cycling video buffer. The cycling video buffer is configured to store the number of frames of this loop sequence. In loop mode, the frame at the start point is the frame right next to the frame at the end point of the loop sequence. The method also comprises receiving a second command for the loop sequence when loop playing the video. Upon the receiving of a second command, playing the video content item in normal mode, using a first-in-first-out video buffer.

The present principles also relate to a device comprising a memory associated to a processor, the processor configured to manage the memory and to implement the present method.

### 4. Brief Description of Drawings

The present disclosure will be better understood, and other specific features and advantages will emerge upon reading the following description, the description making reference to the annexed drawings wherein:
- **Figure 1** diagrammatically shows a network configuration comprising a video server and at least one video player client working in a client-serve mode, according to a non-restrictive embodiment of the present principles;
- **Figure 2** shows an example architecture of a video player device which may be configured to implement a method described in relation with figure 5, according to a non-restrictive embodiment of the present principles;
- **Figure 3** shows an example of a video content item comprising a loop sequence, according to a non-restrictive embodiment of the present principles;
- **Figure 4** shows an example of a video content item comprising several loop sequences, according to a non-restrictive embodiment of the present principles;
- **Figure 5** illustrates a method of loop-playing a video content item in client-server mode, according to a non-restrictive embodiment of the present principles;
- **Figure 6** illustrates the managing of the video buffer of memory of figures 1 and 2 when the player is playing back a tiled video content, according to a non-restrictive embodiment of the present principles;
- **Figure 7** shows an example architecture of a device which may be configured to implement a method described in relation with figure 5, according to a non-restrictive embodiment of the present principles;

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

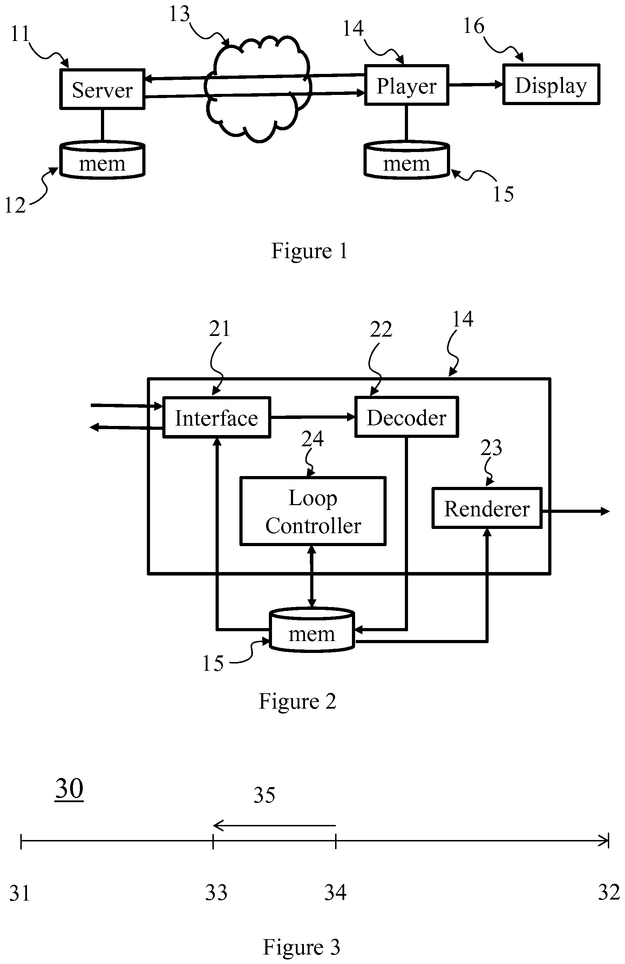

**Figure 1** diagrammatically shows a network configuration comprising a video server and at least one video player client working in a client-serve mode. A server 11 is connected to a network 13, for example an ADSL or a LAN network. The server manages a memory 12, for example a set of hard disks, in which is stored at least one video content item, for instance as a file comprising a compressed sequence of frames and metadata. A video player 14 is connected to the network 13 and is configured to behave as a client of server 11, for example according to standard protocol such as HTTP, MPEG2 or AVC. When consuming a video content item from server 11, player 14 requests video data packets corresponding to a given video frame (or to a given list of consecutive video frames) according to the frame actually rendered and/or displayed onto a display 16.

Player 14 manages memory 15 comprising a video buffer in which packets representative of frames of the video content item under streaming are stored. According to the present principles, the memory space reserved for the video buffer in memory 15 has a size depending on a playing mode. In other words, the player manages several playing modes and adapts the size of the video buffer and the associated filing method according to the playing mode. This has the advantage not to overloading memory 15 when the playing mode does not require it and not to overloading the network with packet requests when loop playing a sequence. Player 14 sends packet requests to server 11 through network 13 and server 13 transmits these packets to player 14 through network 13 or, in another embodiment, through a different network. For example, player 14 may request packets via a GSM network and server 11 may send packets via an ADSL network. Requested packets correspond to video frames that the player needs to fill the video buffer of memory 15. In a well-known embodiment, the video buffer of memory 15 may be a 'first-in first-out' buffer. Player 14 may be connected to one or more display device 16. Player 14 transmits the image to be displayed to display device(s) 16 at the right time, for example at a regular frequency such as 25 hertz or 30 hertz.

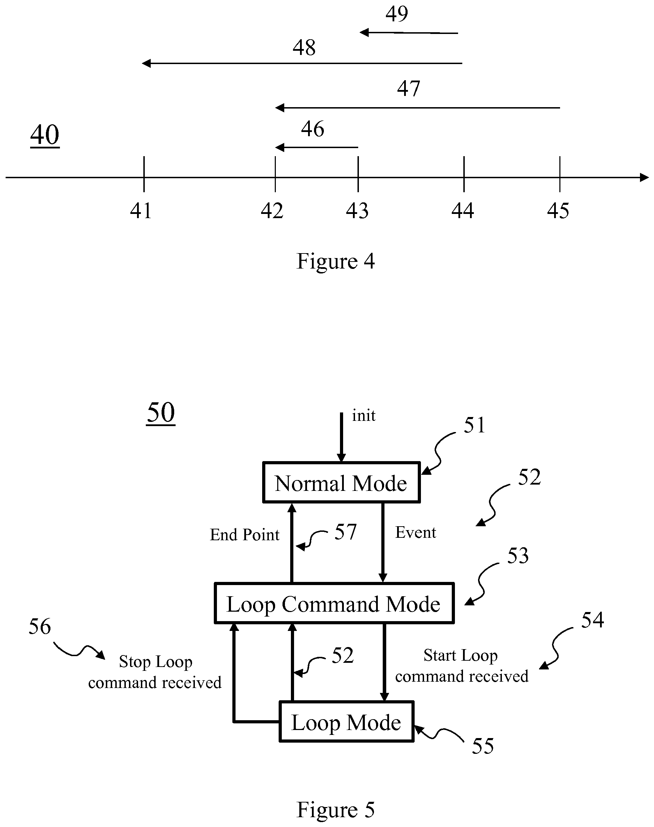

**Figure 2** shows an example architecture of a video player device 14 which may be configured to implement a method described in relation with figure 5. Device 14 comprises an interface circuit 21 configured to send packet request to server 11 according to the status of video buffer of memory 15. Interface 21 is further configured to receive video packets that server 11 transmits in response. Interface 21 transmits received video packets to a decoder circuit 22. Decoder 22 is configured to decode video packets to generate video frames. Decoder 22 stores video packets or video frames in the video buffer of memory 15. In a variant, video packets are stored in memory 15 by interface 21. In a variant, memory 15 comprises a first video buffer for storing video packets and a second video buffer for storing video frames. In another embodiment, decoder 22 decodes video packets only when requested by renderer circuit 23. The storage of video packets or video frames in memory 15 modifies the status of the video buffer and trigger the requesting of new video packets by interface 21. Renderer circuit 23 observes memory 15 and manages a clock to transmit video frames to display device(s) 16. Renderer 23 removes transmitted video frames from memory 15, modifying the status of the video buffer and triggering the requesting of new video packets by interface 21. Renderer 23 may receive commands from a user to manage the playing of the video. For example, renderer 23 may receive trick modes like 'play', 'pause' or 'fast forward'.

According to the present principles, player device 14 comprises a loop controller circuit 24. In a variant, loop controller circuit 24 is a component of renderer circuit 23. Loop controller circuit 24 obtains information representative of start points and end points of sequence loops comprised in the video content item. Information about a loop sequence (comprising start point and end point) is obtained before the start point of the loop sequence. Loop controller 24 may receive commands from a user for triggering or cancelling loop playing mode. Loop playing mode may be enabled and disabled only before the end point. When the player is playing back a video content item which comprises loop sequence, loop controller 24 may render messages, for example by displaying a textual message on display device 16 or by synthetizing a vocal message on a speaker, to inform a user that loop sequences are comprised in the video content item. For example, a message indicating a loop sequence, for instance with number identifying the loop sequence, may be displayed in a corner of the screen to indicate that the user may use its remote control or a keyboard or any command means, to trigger the playing mode into loop mode for this loop sequence by, for instance, pressing a dedicated key plus the corresponding number on its remote control. To make the player enter in loop mode, the command has to be received before the end point of the loop sequence. The corresponding message is no longer rendered when a frame after the end point of the loop sequence has been rendered and/or displayed. Reciprocally, when in loop mode, a command may be received by loop controller 24 to stop the loop mode and re-enter in 'linear' playing mode. When switching from a playing mode to another, loop controller 24 adapts the size of the video buffer and the associated filing method. These adaptations are advantageously performed to minimize required size of memory 15 when the playing mode does not require it and to minimize the number of packet requests through the network when loop playing a sequence.

**Figure 3** shows an example of a video content item comprising a loop sequence. A video content item 30 is a sequence of video frames temporally organized. Video content item has a first video frame 31 and a last video frame 32. A loop sequence 35 is a section of the frame sequence of the video content item. A loop sequence comprises a start point 33 that is a frame referenced within the video by a frame index or by a timestamp and an end point 34 that is also a frame referenced by a frame index or a timestamp. In loop mode, when the player is playing back frame 34, instead of playing back the next frame, it plays back frame 33 and following ones. When playing back frame 34 a second time, if still in loop mode, the operation is reiterated. In an advantageous embodiment, a loop sequence 35 is seamless, that is, the user does not see the stitch from end point 34 to start point 33.

**Figure 4** shows an example of a video content item comprising several loop sequences. In video content item 40, four loop sequences are inserted one in another. Five (5) points are noticeable, that is their frame index or time stamp are obtainable by the player, before the playing back of the associated end point. A loop sequence 46 has a start point 42 and an end point 43. A loop sequence has the same start point 42 but an end point 45 further in the frame sequence. A loop sequence 48 has a start point 41 before start point 42 and an end point 44 between end points 43 and 45. A loop sequence 49 has a start point 43 which is also the end point of loop sequence 46 and the same end point 44 than loop sequence 48. Start and end points may be frame indices or timestamps encoded as metadata. Interface 21 of figure 2 sends a request to the server to obtain packets comprising these metadata. In a variant, start and end points are encoded with other metadata relative to the video content item and obtained when browsing a catalog, for example. In another variant, frames of the video content item are associated with a flag or a code indicating the loop sequences that the frame belongs to. In the example of figure 4, frames between points 42 and 43 belong to loop sequences 46, 47 and 48. Any suitable way to encode these belongings may be used. For example, a bit may be used for every loop sequence, having a value 1 when the frame belongs to the loop and a value 0 otherwise. The player detects start and end points of a loop by observing rising edge and falling edge of the bit value. A same bit may be used for two (or more) non-overlapping loop sequences.

**Figure 5** illustrates a method 50 of loop-playing a video content item in client-server mode. At initialization, the player is set in a first mode 51 herein called 'normal mode'. In normal mode 51, the video buffer is configured as a first-in first-out buffer of a constant size, for example corresponding to two seconds of video or to one hundred video frames. In normal mode 51, the player renders video frames at the output of the buffer and transmits them to the display devices. When there is some available space in the video buffer, the player sends requests to the server to obtain video packets corresponding to next video frames to download. The video buffer contains video frames in advance of their rendering in order to smoothly play the video despite the possible network lag. Start and end points of loop sequences comprised in the video content item under playing are obtained by any suitable means as described in relation to figure 4.

An event 52 is detected, for example the playing of the frame of the start point of a loop sequence. In a variant, event 52 is the playing of the first frame of the video content item. In this variant, loop command mode 53 is the same mode than normal mode 51. In another variant, event 52 is the playing of the frame a given time before the end point of a loop sequence, for example ten seconds or thirty seconds before the end point. When event 52 is detected, the player switch to a second mode 53 herein called 'loop command mode' associated with at least one identified loop sequence (i.e. every loop sequence for which an event 52 has been detected). When entering in loop command mode 53 for a loop sequence, the player renders a message to indicate to users that they might switch into loop mode for this loop sequence. The message may be a textual message displayed on the display devices connected to the player, or, for example, an oral message or a haptic message. Any suitable means to inform the users may be used.

A first command 54, herein called 'start loop' command, may be received for a given loop sequence. A start loop command 54 is valid only if the player is in loop command mode 53 for this loop sequence at the receiving. A start loop command 54 may be initiated by a user, for example by using a remote control or a keyboard or any other suitable means. In a variant, a start loop command 54 may be automatically initiated according to data representative of user preferences and/or according to the player device performances and/or according to the network bitrate and/or according to features of the rendered video frames. Any suitable data may be used to automatically initiate a start loop command. At the receiving of a valid start loop command 54, the player switch in a third mode 55 herein called 'loop mode' for at least one loop sequence. In the example of figure 4, the player may potentially be in loop mode 55 for several loop sequences, for illustration for loop sequences 46, 47 and 48.

When entering in loop mode 55, the player adapts the size and managing of the video buffer. The video buffer is configured as a cycling buffer. In an embodiment, the size of the video buffer is adapted to be able to store the number of frames comprised from the earliest start point to the earliest end point of every loop sequence in loop mode. In the example of figure 4, for illustration purpose, at a first instant, the player may have entered in loop mode for loop sequence 48. Then, the video buffer size is adapted to be able to store video frames between start point 41 and end point 44. That is, video frames downloaded for playing sequence 48 are kept as long as the player is in loop mode for loop sequence 48. These video frames will not be requested again when looping back to frame at start point 41. In this embodiment, the video buffer is no longer configured as a first-in first-out buffer but as a cycling buffer. At a second instant, before playing the end point 43 (even after some loops on loop sequence 48), the player enters in loop mode for loop sequence 46. Then, the size of the video buffer is decreased to be able to store video frames from start point 41 to end point 43. Indeed, as long as the player is in loop mode for loop sequence 46, video frames from end point 43 to end point 44 will not be played. In a variant, such a decreasing of the size of the video buffer is performed only if video frames from end point 43 to end point 44 have not yet been downloaded. In another embodiment, the size of the video buffer is adapted to store the video frames of the bigger or the smaller loop sequence in loop mode. In another embodiment, the adaptation (increasing or decreasing) of the size buffer is performed at each rendering of a video frame up to reach a size as determined in the previously described embodiments.

If an event 52 for a given loop command occurs when the player is in loop mode for a set of other loop sequences, the players enters in loop command mode 53 for this given loop sequence. Modes 51, 53 and 54 are understood by loop sequence and for a given loop sequence. The player is in a mode per loop sequence. According to the present principles, the video buffer is a first-in first-out buffer if the player is in normal mode 51 or loop command mode 53 for every loop sequences of the video content item. When the player is in loop mode 55 for at least one loop sequence, the video buffer is a cycling buffer.

When in loop mode 55 for a loop sequence, the player may receive a second command 56 herein called 'stop loop' command for this loop sequence. In response to such a command, the player switches back to loop command mode 53 for this loop sequence. The player may stay in loop mode for other loop sequences. When the player is in loop command 53 for a given loop sequence, the end point of this given loop sequence is up to be played. When the player is playing back 57 the frame corresponding to the end point of a loop sequence for which the player is in loop command mode 53, the player switches back to normal mode 51 for this loop sequence.

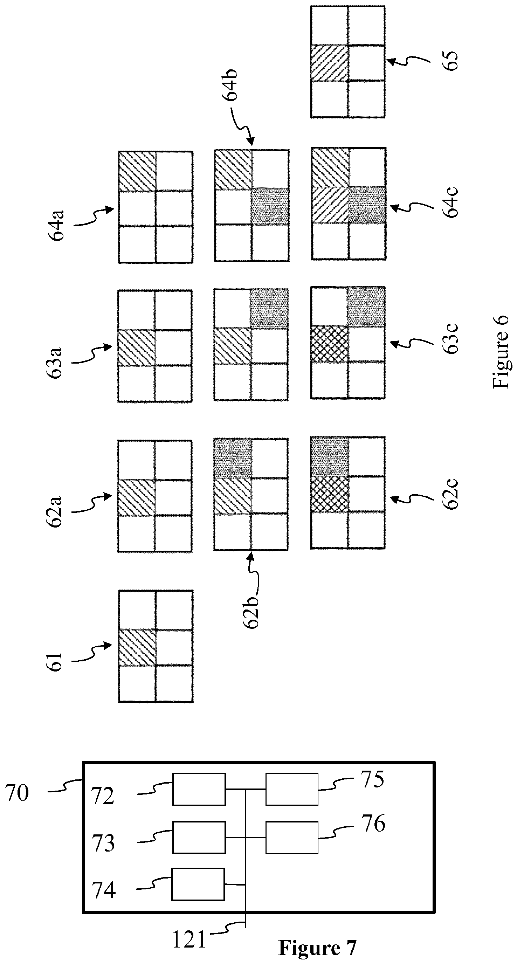

**Figure 6** illustrates the managing of the video buffer of memory 15 of figures 1 and 2 when the player is playing back a tiled video content, for example an immersive video content item. In the example of figure 6, values used for the size of the video buffer, the size of the loop sequence and the number of tiles in an image are illustrative, for clarity of the example; a person skilled in the art would easily adapt these values to a real scenario. In this example, the player is in loop command mode for a loop sequence. The loop sequence comprises 3 video frames. Video frames have a high resolution and/or definition like, for instance, in the domain of immersive video in which the user cannot see the entirety of a frame at once but has to rotate her/his head to discover parts of the frame s/he cannot see otherwise. A display device for consuming immersive video content is, for instance, a Head-Mounted Display device (HMD). In the example of figure 6, video frames are split in 6 tiles. The player is requesting only one tile of a frame at a time according to the direction of the gaze of the user in order not to overload the network and to avoid network lag.

In a variant, the player may request a 'central' tile and neighbor tiles. Central tile may be sent in full quality and neighbor tiles in low quality, for example when the video is encoded in a scalable format. As the requested tile depends on the direction of the gaze of the user, the size of the firs-in first-out buffer is small. For illustration, in the example of figure 6, the video buffer comprises two frames (or two tiles) in first-in first-out configuration, for normal mode and loop command mode.

In this scenario, the player is already in loop command mode for a loop sequence comprising three frames 62 to 64. A tile of a frame 61 is requested and received from the server. A tile 62a of the next frame 62 is requested and received from the server. Then the video buffer is full. Frame 61 is played and erased from the first-in first-out video buffer. So, a tile 63a of the next frame 63 is requested, received and stored in the buffer (in backward diagonal in figure 6). A first command is then received for the loop sequence. The player switch to loop mode for the loop sequence and the video buffer is turned a cycling buffer with a size adapted to store the three frames of the loop sequence. The tile 62a is then played but is not erased from the buffer. However, the buffer now comprises an empty slot and so, a tile 64a of the next frame 64 is requested, received and stored. Playing and downloading may be asynchronous. This is the role of the video buffer to buffering this lag. Tile 63a is played but not erased. As the player is in loop mode, the next frame is frame 62, that is the frame at the start point of the loop sequence. For a complete frame downloading, no request would be sent as described in relation to figure 5 because the frame would already be stored in the cycling buffer. In case of tiled frames, a new request may be sent to the server if the requested tile, here tile 62b, is not already stored in memory (in vertical strips in figure 6). In the variant with a low quality of neighbor tiles, a part of tile 62b is already stored in the cycling buffer. Only the upgrading part is requested to the server and low-quality version of tile 62a is explicitly not requested as the full quality version has already been received and stored in the video buffer. The same heuristics is used if tile 62b shares neighbor tiles with tile 62a. In a variant, upgrading data are requested for these shared neighbor tiles.

This process is reiterated as long as the player is in loop mode for this loop sequence (and no other loop sequence). After the requesting of tile 64b, the next tile to request is tile 62c. Yet, tile 62c (in forward diagonal in figure 6) is the same than tile 62a and is already in full quality in the video buffer. No request is sent, so no packets are sent by the server. The same situation occurs for next tile 63c. This method has the advantage to reduce the number of requests and video packets transmitted over the network.

When a second command is obtained for the loop sequence, the player switch to loop command mode for the loop sequence and the video buffer is turned back a first-in first-out buffer. A tile for frame 65 is requested when a slot is freed and the player switch back to normal mode for the loop sequence when tile 64c corresponding to the end point of the loop sequence is played.

**Figure 7** shows an example architecture of a device 70 which may be configured to implement a method described in relation with figure 5.

The device 70 comprises following elements that are linked together by a data and address bus 71:
- a microprocessor 72 (or CPU), which is, for example, a DSP (or Digital Signal Processor);
- a ROM (or Read Only Memory) 73;
- a RAM (or Random Access Memory) 74;
- a storage interface 75;
- an I/O interface 76 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 73 comprises at least a program and parameters. The ROM 73 may store algorithms and instructions to perform techniques in accordance with present principles. When switched on, the CPU 72 uploads the program in the RAM and executes the corresponding instructions.

The RAM 74 comprises, in a register, the program executed by the CPU 72 and uploaded after switch-on of the device 70, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with examples, the device 70 is configured to implement a method described in relation with figure 5, and belongs to a set comprising:
- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for playing a video content item, the method comprising:
- obtaining data representative of a start point 33 and an end point 34 of a loop sequence 35 comprised in said video content item;
- playing said video content item in a mode 51, called normal mode, for said loop sequence 35, using a first-in-first-out video buffer;
- when receiving a first command for said loop sequence 35, playing said video content item in a mode 55, called loop mode for said loop sequence 35, using a cycling video buffer; wherein said cycling video buffer is configured to store a number of frames of said loop sequence 35 and wherein start point frame is the frame after end point frame; and
- when receiving a second command for said loop sequence 35, playing said video content item in said normal mode 51, using a first-in-first-out video buffer.

2. The method of claim 1 comprising:
- when playing said video content item in normal mode for a loop sequence, detecting an event 52 for said loop sequence, said event 52 being determined according to said start point, and as a response, playing said video content item in a mode 53 for said loop sequence, called loop command mode, using a first-in-first-out video buffer;
- considering first command for said loop sequence only when in loop command mode for said loop sequence; and
- when receiving said second command for said loop sequence, playing said video content item in said loop command mode 51 for said loop sequence, and when playing a frame after said end point of said loop sequence, playing said video content item in said normal mode for said loop sequence.

3. The method of claim 1 or 2, wherein said video content item comprises more than one loop sequence, said obtained data being representative of start and end points of said loop sequences; the method comprising playing said video content item in a normal mode for every loop sequence and, upon the receiving of a first command for a loop sequence, playing said video content item in loop mode for said loop sequence.

4. The method of claim 3, wherein, when playing said video content item in loop mode for more than one loop sequence, the cycling video buffer is configured to store the number of frames of the shortest loop sequence.

5. The method of claim 3, wherein, when playing said video content item in loop mode for more than one loop sequence, the cycling video buffer is configured to store the number of frames of the longest loop sequence.

6. A device for playing a video content item, the device comprising:
- means for obtaining data representative of a start point 33 and an end point 34 of a loop sequence 35 comprised in said video content item;
- means for playing said video content item in a mode 51, called normal mode, for said loop sequence 35, using a first-in-first-out video buffer;
- means for receiving a first command for said loop sequence 35 and, in response to said first command, means for playing said video content item in a mode 55, called loop mode for said loop sequence 35, using a cycling video buffer; wherein said cycling video buffer is configured to store a number of frames of said loop sequence 35 and wherein start point frame is the frame after end point frame; and
- means for receiving a second command for said loop sequence 35, in response to said second command, means for playing said video content item in said normal mode 51, using a first-in-first-out video buffer.

7. The device of claim 6 comprising:
- when playing said video content item in normal mode for a loop sequence, means for detecting an event 52 for said loop sequence, said event 52 being determined according to said start point, and as a response, means for playing said video content item in a mode 53 for said loop sequence, called loop command mode, using a first-in-first-out video buffer;
- means for receiving said first command considering said first command for said loop sequence only when in loop command mode for said loop sequence; and
- when receiving said second command for said loop sequence, playing said video content item in said loop command mode 51 for said loop sequence, and when playing a frame after said end point of said loop sequence, playing said video content item in said normal mode for said loop sequence.

8. The device of claim 6 or 7, wherein said video content item comprises more than one loop sequence, said obtained data being representative of start and end points of said loop sequences; the device comprising means for playing said video content item in a normal mode for every loop sequence and, upon the receiving of a first command for a loop sequence, playing said video content item in loop mode for said loop sequence.

9. The device of claim 8, wherein, when playing said video content item in loop mode for more than one loop sequence, the cycling video buffer is configured to store the number of frames of the shortest loop sequence.

10. The method of claim 8, wherein, when playing said video content item in loop mode for more than one loop sequence, the cycling video buffer is configured to store the number of frames of the longest loop sequence.

11. A data stream comprising a video content item and data indicating a start point and a end point for at least one loop sequence within said video content item.

12. The data stream of claim x, wherein a code is associated to every frame of said video content item, said code indicating whether said frame belongs to a loop sequence of said at least one loop sequence.
